Europäisches Patentamt

European Patent Office

Office européen des brevets

(19)

(11) Publication number: **0 063 940**
**A2**

## EUROPEAN PATENT APPLICATION

(21) Application number: 82302116.7

(22) Date of filing: 26.04.82

(51) Int. Cl.³: **B 24 C 1/04**

(30) Priority: 29.04.81 GB 8113159

(43) Date of publication of application: 03.11.82
Bulletin 82/44

(84) Designated Contracting States: AT BE CH DE FR GB IT
LI LU NL SE

(71) Applicant: UNIPUMP PARTS LIMITED, The Hollies
Chavey Down Road, Winkfield Row Near Bracknell
Berkshire (GB)
Applicant: WATER RESEARCH CENTRE, P.O.
Box 65 Franklin Road, Blagrove Industrial Estate
Swindon (GB)

(72) Inventor: Worthy, Ernest John Courtney, The Hollies
Chavey Down Road Winkfield Row, Near Bracknell
Berkshire (GB)

(74) Representative: Sheader, Brian N. et al, 5 Market Way
Broad Street, Reading Berkshire, RG1 2BN (GB)

(54) Cutting method and apparatus.

(57) This invention provides a method of and apparatus for
cutting within the confines of a passage. The method com-
prises introducing into the passage a cutting apparatus, sup-
plying to the cutting apparatus fluid under pressure, supplying
separately to the cutting apparatus a particulate abrasive material suspended in a fluid, mixing at least part of the fluid under
pressure with the particulate abrasive material suspended in a
fluid, and directing the mixture of fluid and particulate abrasive
material under pressure onto a surface to be cut. The appara-
tus comprises a body portion (1, 21), a head portion (2, 25) rotatable relative to the body portion (1, 21) and comprising at
least one cutting nozzle (11, 25) means (3, 34) for connecting
the apparatus to a source of fluid under pressure, means (5,
41) for connecting the apparatus to a source of particulate abrasive material suspended in a fluid, means (10 or 32, 37) for
rotating the head portion, and venturi means (14 or 26, 30) for
mixing the particulate abrasive material suspended in a fluid
with the fluid under pressure. The apparatus preferably com-
prises drive nozzles (8, 53) whereby part of the fluid under
pressure can be directed rearwardly and outwardly of the ap-
paratus to impart drive to the apparatus and an inflatable collar
(46) which can be inflated to locate the apparatus in a passage
during a cutting operation.

1

## CUTTING METHOD AND APPARATUS

This invention relates to a cutting method and apparatus and more particularly to a method of and apparatus for cutting through solid materials within the confines of passages, tunnels, pipes or the like (hereinafter for ease of reference termed "passages"), e.g., within the confines of sewers, water mains and the like.

One method of repairing damaged sewers is to insert therein a suitable lining, e.g., in the form of a plastics pipe of suitable diameter. Generally the lining is inserted into the sewer by opening up the sewer at a suitable location, forming a trench which inclines towards the open sewer at an obtuse angle and forcing lengths of the lining into the sewer using a suitable tractor-type vehicle. Before the lining can be inserted it is clearly necessary that the interior of the sewer be free from any obstructions. Relatively soft obstructions such as tree roots, projecting mortar or other packing from joints, and the like can be removed by using a suitable known rotary cutting blade apparatus. Difficulties are, however, encountered when dealing with harder projections such as the projecting ends of branch sewer pipes

2          0063940

and the like entering the sewer being lined since not only must such projecting ends be removed but also apertures need to be provided in the lining corresponding to each branch sewer to enable the branch sewers to feed into the sewer being lined. The branch sewer pipes will generally be of either salt glazed earthenware or of cast iron, neither of which can be cut using the known rotary cutting blade apparatus, and because it has not been possible to form apertures in the lining corresponding to each branch sewer in situ once the lining has been inserted into a sewer it has been necessary to form the apertures prior to the insertion of the lining, with the result that difficulties are encountered in ensuring that the lining is inserted in the correct axial and angular disposition relative to the sewer to properly align the apertures with the branch sewer pipes.

A different problem is encountered with water mains and other passages for fluids in that hard deposits such as hard scale frequently build up on the internal surfaces thereof and restrict the flow therethrough. Such deposits cannot be removed using the known rotary cutting blade apparatus and usually the only known way of cleaning the internal surfaces of water mains and other fluid passages to remove hard deposits therefrom is by the use of acids, which frequently entails the dismantling of the fluid system. Thus, for example, in industrial water cooling systems it is not unusual for scale and other hard deposits within the system to create such a problem that the system has to be dismantled once or twice a year for acid cleaning of the internal surfaces thereof and the system then re-assembled, with consequent downtime of the production facility.

The present invention has as its object the provision of a method and apparatus which will enable the cutting of materials such as salt glazed earthenware or cast iron in situ within the confines of passages, e.g., sewers or water mains.

The present invention also has as its object the provision of a method and apparatus which will enable apertures to be cut in the wall of a lining corresponding to branch passages when the lining is in situ, e.g., in a sewer or water main.

The present invention has as a further object to provide a method and apparatus which will enable the internal surfaces of fluid passages to be cleaned in situ, e.g., to remove hard deposits such as hard scale therefrom.

The present invention provides a method of cutting within the confines of a passage, the method comprising:

    (a) introducing into the passage a cutting apparatus;

    (b) supplying to  said cutting apparatus a fluid under pressure;

    (c) supplying separately to said cutting apparatus a particulate abrasive material suspended in a fluid

    (d) mixing at least part of the fluid under pressure with the particulate abrasive material, and

    (e) directing the mixture of fluid and particulate abrasive material under pressure onto a surface to be cut.

Said cutting apparatus may comprise a body portion and a head portion rotatable relative to the body portion.  The method may

4 0063940

comprise using part of said fluid under pressure to rotate the head portion or rotating the head portion by rotation of a supply conduit supplying fluid under pressure and/or particulate abrasive material to the cutting apparatus. Part of the fluid under pressure may be used for driving the cutting apparatus along a passage to a cutting location.

The present invention also provides cutting apparatus comprising a body portion, a head portion rotatable relative to the body portion and having at least one cutting nozzle, means whereby the apparatus can be connected to a source of fluid under pressure, means whereby the apparatus can be connected to a source of particulate abrasive material suspended in a fluid, means for rotating the head portion, and means for mixing fluid under pressure with particulate abrasive material and supplying the resultant mixture under pressure to said at least one cutting nozzle.

The apparatus may be separately connectable to a said source of fluid under pressure and to a said source of particulate abrasive material suspended in a fluid by suitable flexible hoses.

Said means for rotating the head portion may be fluid pressure actuated and may comprise a plurality of thruster nozzles spaced about the periphery of the head portion and means for directing a part of the fluid under pressure to said thruster nozzles. Alternatively the means for rotating the head portion may comprise a suitable mechanical drive transmission, e.g., a supply conduit for supplying fluid under pressure and/or particulate abrasive material to the apparatus and means for rotating the supply conduit about its longitudinal axis.

Preferably the cutting apparatus of the present invention is adapted to be driven along a passage to a required cutting position by fluid under pressure. To this end the apparatus preferably comprises a plurality of drive nozzles on said body portion for directing fluid under pressure both rearwardly and outwardly to impart drive to the apparatus and means for directing a part of the fluid under pressure supplied to the apparatus when the apparatus is in use to said drive nozzles. Said drive nozzles may be located on a rear part of the body portion. Thus, when the apparatus is in use, part of the fluid under pressure from said source will be used to drive the apparatus along a passage to a required cutting position. and part will be mixed with the particulate abrasive material and used for cutting. In addition, part of the fluid under pressure may be used for rotating said head portion.

Preferably the apparatus is so sized that it can move freely in a passage of suitable size into which it is introduced. To locate the apparatus in the passage whilst cutting is in progress and to prevent the apparatus being displaced from its cutting position, e.g., due to reaction from fluid under pressure and particulate abrasive material issuing from the at least one cutting nozzle, the apparatus may include an inflatable collar which is inflatable into tight engagement with the internal surface of a passage to locate and prevent displacement of the cutting apparatus. Said collar is preferably inflatable using the fluid suspension of particulate abrasive material to inflate it.

0063940

Although the fluid under pressure may be any suitable fluid under pressure it will, in practice, generally be water since in most cases water will be the cheapest and most readily available source of fluid under pressure.

The particulate abrasive material may be any suitable discrete abrasive material such as sand, silicon carbide, or the like. Generally sharp sand will be used since in most cases this will be the cheapest and most readily available particulate abrasive material. Preferably the particulate abrasive material will be suspended in water.

In the method and apparatus of the present invention the fluid under pressure and the particulate abrasive material are supplied separately to the apparatus. This enables the particulate abrasive material to be supplied to the apparatus at a relatively low pressure, e.g., of about 703 to 844 grams per square centimetre (10 to 12 psi). It also enables mixing of the particulate abrasive material with fluid at a higher pressure to be delayed until just before the mixture issues from said at least one cutting nozzle. In this way, wear of those parts of the apparatus, except the at least one cutting nozzle, with which the abrasive material comes into contact can be kept to a minimum whilst the at least one cutting nozzle can be formed or lined with a hard wear resistant material such as tungsten carbide or a suitable ceramic material and/or may be removably mounted so that it can readily be renewed.

The means for mixing fluid under pressure with particulate abrasive material suspended in a fluid at a much lower pressure may comprise a venturi.

The invention will be more particularly described with reference to the accompanying drawings, in which:-

Figure 1 is a diagrammatic sectional elevation of one embodiment of cutting apparatus according to the present invention, and

Figure 2 is an elevation, partly in section, of another embodiment of cutting apparatus according to the present invention.

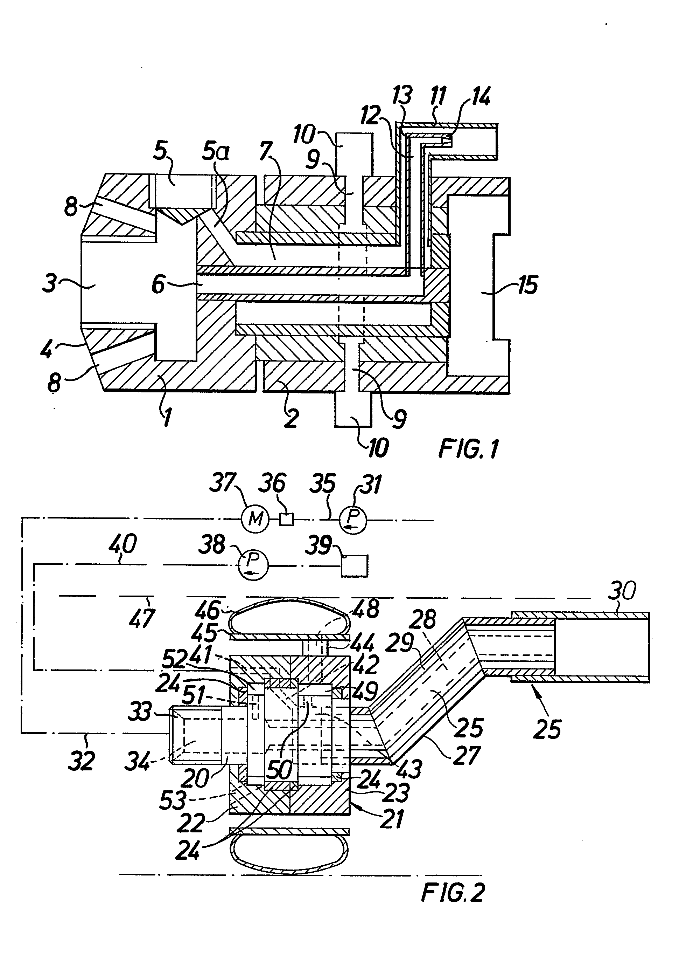

Referring to Figure 1 of the drawings it will be seen that the apparatus illustrated therein comprises a body portion 1 and a head portion 2 mounted on the body portion 1.

The body portion 1 has a rearwardly directed screw threaded bore 3 in a rear wall 4 thereof whereby it can be connected by means of a suitable flexible hose (not shown) to a source of fluid under pressure and a radially directed screw-threaded bore 5 therein whereby it can be connected by means of a suitable flexible hose (not shown) to a source of particulate abrasive material suspended in a fluid under a much lower pressure e.g., of the order of 703 to 844 grams per square centimetre (10 to 12 psi). The bore 3 connects with a passage 6 which extends axially of the head portion 2 whilst the bore 5 connects by way of a passage 5a with an annular passage 7 which surrounds and is coaxial with the passage 6.

Communicating with the bore 3 are a plurality of drive nozzles 8 which are adapted to direct a part of the fluid under pressure supplied to the apparatus outwardly and rearwardly for the purpose of driving the apparatus along a passage to a required cutting location.

The passage 6 communicates with a plurality of radial passages 9 which in turn communicate with a plurality of

thruster nozzles 10 through which another part of the fluid under pressure is directed to impart rotation to the head portion 2.

In addition the passage 6 communicates with a cutting nozzle 11 of the rotatable head portion 2 by way of passage means 12.

The annular passage 7 communicates with the cutting nozzle 11 by means of a radial passage 13.

The cutting nozzle 11 includes a venturi 14 at the end of the passage 12 through which the fluid under pressure directed to the nozzle 11 passes, and the radial passage 13 communicates with the low pressure region downstream of the venturi so that the particulate abrasive material will be entrained in the fluid under pressure issuing from the cutting

nozzle 11.

As will be seen the cutting nozzle 11 is directed forwardly of the apparatus and is provided at an outer peripheral portion of the head portion 2 so as to cut about an annular path having a diameter at least equal to the maximum diameter of the apparatus.

If desired the apparatus may also include a conventional cutting blade 15 which may be removably mounted on the head portion 2 so that it can be removed when the apparatus is to be used for abrasive cutting.

Referring now to Figure 2 of the drawings it will be seen that the cutting apparatus illustrated therein comprises a rotor member 20 mounted for rotation in a split housing 21 comprising housing parts 22 and 23.  Seals 24 are interposed between the rotor member 20 and the housing parts 22 and 23.  Mounted in the rotor member 20 for rotation therewith is a nozzle 25
comprising a pair of concentric tubes 26 and 27 mounted one
within the other so as to define an inner passage 28 for fluid
under pressure and an outer annular passage 29 for particulate
abrasive material suspended in a fluid. The inner passage 28
and outer passage 29 terminate within a nozzle end 30 which
defines an expansion chamber for fluid under pressure issuing
from the inner passage 28. This arrangement provides a venturi
and creates a region of low pressure within the nozzle end 30
into which the particulate abrasive material suspended in a
fluid is fed from the outer passage 29 at a much lower pressure
than the pressure of the fluid in the inner passage 28, whereby
the particulate abrasive material is entrained in the fluid
under pressure and issues with the fluid under pressure from
the nozzle end.

Fluid under pressure from a source (not shown) thereof
is delivered by a pump 31 and a flexible armoured hose 32
connected to a screw-threaded end portion 33 of the rotor
member 20 to the inner passage 28 by way of an axial passage 34
in the rotor member 20. The pump 31 is connected by a static
conduit 35 to a rotary coupling 36 and rotary drive is
imparted to the hose 32 by a motor 37 by way of suitable
gearing (not shown) to impart rotary drive to the rotor member
20. The flexible armoured hose 32 may be a four-strand braided
wire reinforced hose which has been found to be well able to
transmit the required rotary drive to the rotor member 20
without kinking or collapsing.

Particulate abrasive material suspended in a fluid, e.g., water, is delivered by a pump 38 from a source 39 thereof by way of a flexible hose 40 to an inlet passage 41 in the housing part 22. Inlet passage 41 communicates by way of a passage 42 with a chamber 43 in the rotor member 20 and the chamber 43 in turn communicates with the outer passage 29 of the nozzle assembly 25. The pump 38 delivers the suspension of particulate abrasive material at a very much lower pressure than the fluid under pressure is delivered by the pump 31.

Mounted around the housing 21 on a plurality of, e.g., three, spider arms 44 (only one of which is shown) is an annular support 45 for an inflatable collar 46 which can be inflated into engagement with the internal surface of a passage indicated diagrammatically at 47 to locate and prevent displacement of the cutting apparatus in the passage 47 during a cutting operation. The interior of the inflatable collar 46 is connected by way of a passage 48 extending through one of the spider arms 44 and through the housing part 23 to a chamber 49 between the housing part 23 and the rotor member 20. The chamber 49 is in turn connected by a passage 50 in the rotor member 20 to the chamber 43 so that the suspension of particulate abrasive material in fluid can pass from chamber 43 by way of passage 50, chamber 49 and passage 48 to the interior of the inflatable collar 46 to inflate the collar.

A radial passage 51 in the rotor member 20 communicates the axial passage 34 in the rotor member 20 with an annular chamber 52 defined between the rotor member 20 and the housing part 22. Communicating with the chamber 52 are a plurality of drive nozzles 53 (only one of which is shown) which are directed outwardly and rearwardly of the housing part 22 so that fluid under pressure issuing from the drive nozzles 53 will impinge on the internal surface of the passage 47 to drive the cutting apparatus along the passage 47 to a required cutting location.

In use, the cutting apparatus is inserted into the passage 47 with the collar 46 deflated and fluid, e.g., water, under pressure is supplied by the pump 31 and flexible hose 32 to the axial passage 34 in the rotor member 20. Part of the fluid under pressure issues from the drive nozzles 53 to drive the cutting apparatus along the passage 47 to the required cutting location. Once the cutting apparatus has reached the required cutting location a particulate abrasive material, e.g., sharp sand, suspended in fluid, e.g., water, is supplied by the pump 38 and conduit 40 to the cutting apparatus and part of this suspension serves to inflate the collar 46 to locate the cutting apparatus in the passage 47. When the collar 46 is inflated and the cutting apparatus is properly located, rotary drive is imparted to the flexible armoured hose 32 to rotate the rotor member 20 and hence the nozzle assembly 25. The remainder of the fluid under pressure and the remainder of the particulate abrasive material suspended in a fluid are mixed in the nozzle end 30 and issue under pressure from the nozzle end 30 to cut an obstruction or the like in the passage 47.

The apparatus of the invention can be used for removing obstructions in passages e.g., the projecting ends of salt glazed earthenware or cast iron branch pipes in sewers or water mains. The apparatus can also be used for cutting apertures corresponding to branch passages in a liner once the liner has been inserted into a passage e.g., into a sewer or water main.
To this end the apparatus is inserted into a branch passage and
is advanced therealong until it reaches the position where the
branch is closed by the wall of the liner. A mixture of fluid
under pressure and particulate abrasive material are then
supplied to the cutting nozzle and at the same time the head
portion or rotor member is rotated either by supplying fluid
under pressure to the thruster nozzles 10 as in the embodiment
of Figure 1 or by applying rotary drive to the flexible hose 32
as in the embodiment of Figure 2, whereby a circular aperture
substantially corresponding in diameter to the branch passage
can be cut in the liner. The invention is also useful for
clearing the internal surfaces of passages such as water mains,
e.g., so as to remove scale or other hard deposits therefrom.

It will be appreciated that at least the head portion 2 of
the apparatus of Figure 1 or the collar support 45, collar 46
and nozzle assembly 25 of the embodiment of Figure 2 will need
to be matched in outside diameter to the internal diameter of
the passage in which it is intended to be used. Fortunately,
passages such as sewers, water mains and the like are generally
of a limited number of standard sizes and it is a relatively
simple matter to provide apparatus according to the invention
adapted for use with a required standard size of sewer or water
main. This is particularly easy with the embodiment of Figure 2
where it is only necessary to replace the collar support 45 and
collar 46 with a different collar support of a different diameter
and, if necessary, to replace the nozzle assembly 25 with a
nozzle assembly of a different radial extent.

Claims:-

1.  A method of cutting within the confines of a passage, the method being characterised in that it comprises:

(a)  introducing into the passage a cutting apparatus;

(b)  supplying to said cutting apparatus a fluid under pressure;

(c)  supplying separately to said cutting apparatus a particulate abrasive material suspended in a fluid

(d)  mixing at least part of the fluid under pressure with the particulate abrasive material, and

(e)  directing the mixture of fluid and particulate abrasive material under pressure onto a surface to be cut.

2.  A method according to claim 1, wherein the apparatus comprises a body portion (1) and a head portion (2) rotatable relative to the body portion (1) and characterised in that part of the fluid under pressure is used to impart rotation to the head portion (2).

3.  A method according to claim 1, wherein the apparatus comprises a housing (21) and a cutting nozzle assembly (25) rotatable relative to the housing (21) characterised in that rotation is imparted to the cutting nozzle assembly (25) by rotating about its axis a flexible hose (32) connecting the nozzle assembly (25) to a source of fluid under pressure.

4.  A method according to claim 1, 2 or 3, characterised in that part of the fluid under pressure supplied to the cutting apparatus is used to drive the cutting apparatus along said passage.

5.  A method according to any one of the preceding claims, characterised in that the particulate abrasive material suspended in a fluid is supplied to the cutting apparatus at a pressure lower than the pressure of the fluid under pressure, a region of low pressure is created by passing the fluid under pressure through a venturi (14 or 26,30), and the particulate abrasive material suspended in a fluid is mixed with the fluid under pressure in said region of low pressure.

6. A method according to any one of the preceding claims, characterised in that an inflatable collar (46) around the apparatus is inflated to locate the cutting apparatus in said passage during the cutting operation.

7. A method according to claim 6 when dependent upon claim 5, characterised in that particulate abrasive material suspended in a fluid is supplied to the inflatable collar (46) to inflate the collar.

8. Cutting apparatus characterised in that it comprises a body portion (1,21), a head portion (2,25) rotatable relative to the body portion and comprising at least one cutting nozzle (11,25), means (3,34) whereby the apparatus can be connected to a source of fluid under pressure, means (5,41) whereby the apparatus can be connected to a source of particulate abrasive material suspended in a fluid, means (10 or 32,37) for rotating the head portion, and means (14 or 26,30) for mixing the particulate abrasive material suspended in a fluid with the fluid under pressure and supplying the resultant mixture under pressure from said at least one cutting nozzle (11,25).

9. Apparatus according to claim 8, characterised in that said means for rotating the head portion (2) comprises a plurality of thruster nozzles (10) spaced about the periphery of the head portion (2) and means (9) for directing a part of the fluid under pressure to said thruster nozzles.

10. Apparatus according to claim 8, characterised in that said means for rotating the head portion (25) comprises a flexible hose (32) drivingly connected to the head portion (25) and rotatable about its longitudinal axis by drive means (37).

11. Apparatus according to claims 8, 9 or 10, characterised in that it comprises drive nozzles (8,53) for directing fluid under pressure both rearwardly and outwardly to impart drive to the apparatus and means (51,52) for supplying part of the fluid under pressure to said drive nozzles (8,53) when the apparatus is in use.

12. Apparatus according to any one of claims 8 to 11, characterised in that it comprises an inflatable collar (46) which can be inflated to locate the apparatus in a passage during a cutting operation.

13. Apparatus according to claim 12, characterised in that means (43,50,49,48) is provided for supplying part of the particulate abrasive material suspended in a fluid to said inflatable collar (46) to inflate the collar.

14. Apparatus according to any one of the preceding claims 8 to 13, characterised in that said body portion (1) comprises a housing (21) and a rotor member (20) rotatably mounted in the housing (21) and wherein said head portion comprises a nozzle assembly (25) mounted on said rotor member (20) for rotation therewith.

15. Apparatus according to claim 14, characterised in that the rotor member (20) has an axial passage (34) therethrough which is connectable to said source of fluid under pressure, a chamber (43) in communication with said source of particulate abrasive material suspended in a fluid is defined between said housing (21) and the rotor member (20), said nozzle assembly comprises a pair of concentric tubes (26,27) mounted one within the other so as to define an inner passage (28) and an outer passage (29), said inner passage (28) is in communication with said axial passage (34) in the rotor member (20) and said outer annular passage is in communication with said chamber (43).

FIG. 1

FIG. 2